# EUROPEAN PATENT SPECIFICATION

(11) **EP 2 277 375 B1**
(45) Date of publication and mention of the grant of the patent: **14.08.2013**
(21) Application number: 10167675.7
(22) Date of filing: 29.06.2010
(51) Int. Cl.: A01K 89/01

(54) **Fishing spinning reel**
Angelrolle
Bobine de fil de pêche

(30) Priority: 29.06.2009 JP 2009153739; 30.07.2009 JP 2009178215
(43) Date of publication of application: 26.01.2011
(73) Proprietor: Globeride, Inc., Higashikurume-shi Tokyo 203-8511 (JP)
(72) Inventor: Fujioka, Masashi, Tokyo 203-8511 (JP); Shibata, Takashi, Tokyo 203-8511 (JP); Tsutsumi, Wataru, Tokyo 203-8511 (JP); Kaneko, Kyoichi, Tokyo 203-8511 (JP)
(74) Representative: Zimmermann & Partner

(56) References cited:
- EP-A1- 1 260 138
- FR-A1- 2 760 321
- US-A- 5 605 298

## Description

### Background of the Invention

The present invention relates to a fishing spinning reel including a rotor portion, especially one which is linked with a handle so that the rotor portion rotates as the handle is operated to rotate.

A normal fishing spinning reel includes a rotor which includes, in turn, a line guide portion and a spool around which a line is wound and is designed so that the spool reciprocates at the same time as the rotor rotates as the handle is operated to rotate. A pair of arm portions are formed on opposite sides of a rear portion of a cylindrical main body portion of the rotor so as to face each other, and the line is wound around the reciprocating spool via the line guide portion which is provided on one of the arm portions.

In the fishing spinning reel which is configured as described above, when the handle is operated to wind up the line in response to an actual bite of a fish, the line is largely loaded, and there is the possibility that the arm portions of the rotor are deformed radially inwards when the line is wound up to thereby strike an outer circumference of the spool. Additionally, there is caused a problem that when the line is reeled out against drag force, pulsations are generated by the deformation of the arm portion, whereby the line cannot be reeled out in a smooth fashion.

Then, for example, Japanese Patent No. 2894422 discloses a fishing spinning reel in which a strip-like reinforcement member is provided in an are-like fashion on a line reeling-out position side with a predetermined distance defined between an outer circumference of a rotor and itself so as to extend between distal end portions of a pair of arm portions.

In the fishing spinning reel, however, since the arc-like reinforcement member is provided so as to be spaced a predetermined distance apart from an outer circumference of a spool which reciprocates, the reinforcement is not good enough to reinforce the pair of arm portions. In addition, since the reinforcement member projects largely in a radially outward direction relative to an outer circumferential surface of the spool, it is not possible to realize as much a reduction in weight of the rotor as possible.

US 5,605,298 describes a fishing reel in which a bail is coupled through bail supporting members to the ends of a pair of bail supporting arms which are provided on both sides of a rotor, respectively, in such a manner that the bail is swung to be set at a fishing line winding position and a fishing line releasing position; a protective member for protecting the outer periphery of the spool is provided between the pair of bail supporting arms on the side of the fishing line releasing_position. The protective member can reinforce the bail supporting arms to improve the operation of winding or letting out the fishing line. The spool is protected by the protective member, for instance when the spinning reel is dropped.

### SUMMARY OF THE INVENTION

The invention has been made in view of the problems described above, and an object thereof is to provide a fishing spinning reel which realizes a reduction in weight e.g. of a rotor while maintaining its strength at arm portions.

With a view to attaining the object, a fishing spinning reel according to independent claim 1 is provided. Further advantages, features, aspects and details of the invention are evident from the dependent claims, the description and the drawings.
Aspects of the invention include the following configurations.
(1) A fishing spinning reel comprising:
   a reel main body;
   a spool which is provided on the reel main body and around which a line is to be wound; and
   a rotor which is provided so as to rotate relative to the reel main body,
   wherein the rotor includes:
      a main body portion;
      a pair of arm portions which are formed on opposite sides of the main body portion so as to be opposed to each other and which each include a proximal portion situated axially rearwards and a front portion situated axially forwards (with respect to an axis of the rotor);
      a pair of support members which are provided at the front portions of the pair of arm portions;
      a line guide portion which is provided on one of the support members for guiding a line on to the spool; and
      a pair of reinforcement members which extend (is situated) axially rearwards from the front portions of the pair of arm portions and connect the pair of arm portions so as to be disposed (or while being disposed) radially outwards of the main body portion, wherein
      the pair of reinforcement members are provided on both sides of the pair of arm portions, and are gradually spaced apart from each other as the pair of arm portions extend from distal end portions to the proximal portions when the arm portion is viewed sideways in a direction in which the pair of arm portions face each other, and wherein
   gaps are provided between opposite sides of the proximal portion of the arm portion and the reinforcement members.
(2) The fishing spinning reel according to (1), wherein the reinforcement members include an intermediate portion which is situated axially rearwards and which is connected to the main body portion.
(3) The fishing spinning reel according to (2), wherein the reinforcement members are formed so as to be curved, e.g. curved axially rearwards, and / or wherein the intermediate portion is connected to a rear portion of the main body portion. Especially, the reinforcement members may be curved with the curved portion being arranged on an axially rearwards and / or radially outwards portion, e.g the intermediate portion.
(4) The fishing spinning reel according to (1), wherein the reinforcement members include an intermediate portion which is situated axially rearwards from the main body portion and which is spaced apart from the main body portion.
(5) The reinforcement members are provided on both sides of the pair of arm portions, and gradually diverge from one another in a rearwards direction, when viewed in a direction in which the arm portions are aligned with each other.
(6) The fishing spinning reel according to any of (1) to (5), wherein at least one of an opening and a cutout is formed in the main body portion.
(7) The fishing spinning reel according to any of (2) to (6), wherein the intermediate portion is positioned closer to the reel main body than a rear edge portion of a skirt portion of the spool when the spool reciprocates to be shifted (or is positioned) closest to the reel main body.
(8) The fishing spinning reel according to any of (1) to (7) further comprising a closure member which is provided on the rotor so as to cover a space defined between the proximal portion of the arm portion and the reinforcement members.
(9) The fishing spinning reel according to (8), wherein the closure member is a collar-shaped member which is installed in an interior of the main body portion of the rotor.
(10) The fishing spinning reel according to (8), wherein the closure member is integrated with a cover member which is attached to the arm portions of the rotor.
(11) The fishing spinning reel according to any one of (1) to (10), wherein the reinforcement members extend from side portions of the front portions of the arm portions of the rotor.

According to a further aspect, a fishing spinning reel of the invention has a rotor in which support members including a line guide portion are attached to distal end portions of a pair of arm portions and a spool around which a line is wound via the line guide portion by rotation of the rotor. The fishing spinning reel includes reinforcement members which extend from front portions of the pair of arm portions towards a rear portion of a main body portion of the rotor, and the reinforcement members are spaced apart from the arm portions as they are shifted towards proximal portions of the arm portions so as to be connected to the main body portion of the rotor.

According to a further aspect, the spool is fixed on the main body, and/or the rotor is rotatable about an axis relative to the main body. According to a further aspect, the main body portion surrounds the spool. According to a further aspect, the reinforcement members surround the spool and / or the main body portion (at least partially or even fully). According to a further aspect, the reinforcement members are U-shaped with the bottom of the U being arranged axially rearwards and / or radially outwards.

### BRIEF DESCRIPTION OF THE DRAWINGS

Fig. 1 shows a fishing spinning reel according to a first embodiment and shows particularly an overall configuration thereof.
Fig. 2 shows a rotor portion of the fishing spinning reel shown in Fig. 1.
Fig. 3 is a side view of the rotor shown in Fig. 2 as viewed sideways in a direction in which both arm portions face each other.
Fig. 4 is a sectional view taken along the line A-A in Fig. 2.
Fig. 5 is a plan view of the rotor shown in Fig. 2.
Fig. 6 shows a fishing spinning reel according to a second embodiment and shows particularly a portion of the fishing spinning reel, the portion being a rotor thereof.
Fig. 7 is a sectional view taken along the line B-B in Fig. 6.
Fig. 8 is a perspective view of a main part of the rotor shown in Fig. 6.
Fig. 9 shows a portion of a fishing spinning reel according to a third embodiment, the portion being a rotor thereof, and shows particularly the rotor portion in section.
Fig. 10 is a plan view of the rotor shown in Fig. 9.
Fig. 11 shows the rotor portion and shows particularly a first modified example of a reinforcement member.
Fig. 12 shows the rotor portion and shows particularly a second modified example of a reinforcement member.
Fig. 13 shows a fishing spinning reel according to a fourth embodiment and shows particularly an overall configuration thereof.
Fig. 14 shows a portion of the fishing spinning reel shown in Fig. 13, the portion being a rotor thereof.
Fig. 15 is a side view of the rotor shown in Fig. 14 as viewed sideways in a direction in which both arm portions face each other.
Fig. 16 is a sectional view taken along the line A-A in Fig. 14.
Fig. 17 is a plan view of the rotor shown in Fig. 14.
Fig. 18 is a perspective view of a main part of the rotor shown in Fig. 14.
Fig. 19 shows a fishing spinning reel according to a fifth embodiment and shows particularly a portion of the fishing spinning reel, the portion being a rotor thereof.
Fig. 20 is a side view of the rotor shown in Fig. 19 as viewed sideways in a direction in which both arm portions face each other.
Fig. 21 is a perspective view of a main part of the rotor shown in Fig. 19.
Fig. 22 shows a rotor portion according to a modified example.
Fig. 23 is a side view of the rotor portion shown in Fig. 22.

### DETAILED DESCRIPTION OF EXPLANATORY EMBODIMENTS

Hereinafter, referring to the drawings, fishing spinning reels according to embodiments of the invention will be described. In the following passages different aspects of the invention are defined. Each aspect so defined may be combined with any other aspect or aspects unless clearly indicated to the contrary. In particular any feature indicated as being preferred or advantageous may be combined with any other feature or features indicated as being preferred or advantageous

### First Embodiment

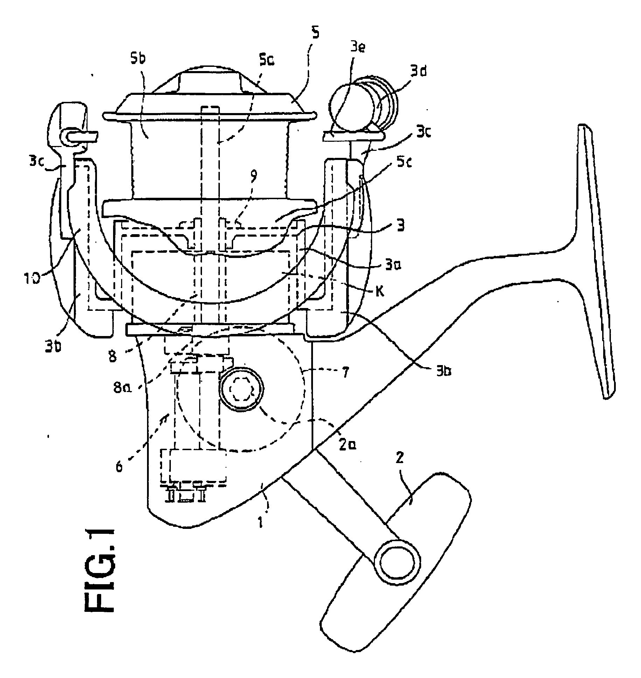

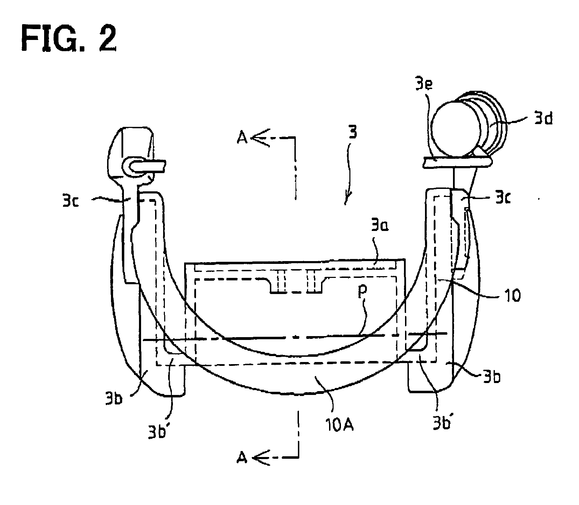

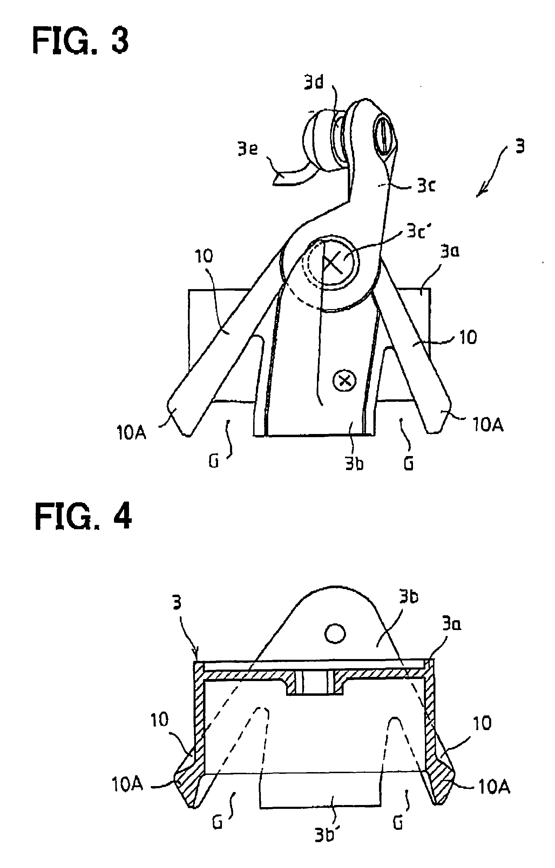

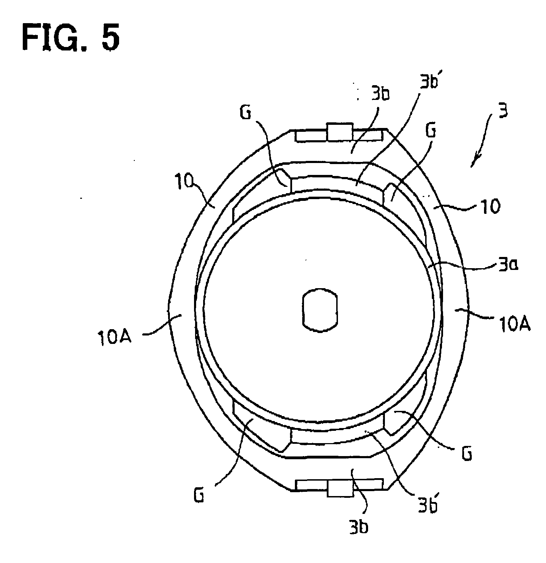

Figs. 1 to 5 show a fishing spinning reel according to a first embodiment. Fig. 1 shows an overall configuration of the fishing spinning reel, Fig. 2 shows a rotor portion of the fishing spinning reel, Fig. 3 is a side view of the rotor as viewed sideways in a direction in which both arm portions face each other, Fig. 4 is a sectional view taken along the line A-A in Fig. 2, and Fig. 5 is a plan view of the rotor.

A reel main body 1 of the fishing spinning reel includes a handle 2 which is operated to rotate, a rotor 3 which is driven to rotate in response to a rotation operation of the handle 2, and a spool 5 which is linked with the rotor 3 so that the spool 5 reciprocates in synchronism with the rotational driving of the rotor 3.

A handle shaft 2a, to which the handle 2 is attached, is supported rotatably within the reel main body 1 via a bearing, and a power transmission mechanism 6 is brought into engagement with the handle shaft 2a so as to transmit rotational operations of the handle 2 to both the rotor 3 and the spool 5.

The power transmission mechanism 6 includes a drive gear 7 which is attached to the handle shaft 2a so as to rotate together therewith and a rotating tubular shaft 8 which extends in a direction which is at right angles to the handle shaft 2a. A pinion 8a is formed at a proximal end side of the rotating tubular shaft 8a so as to mesh with the drive gear 7, and a rotor nut 9 is screwed on a distal end portion of the rotating tubular shaft 8a, whereby the rotor 3 is mounted on the rotating tubular shaft 8.

A spool shaft 5a is inserted into a front portion of an interior of the rotating tubular shaft 8, and this spool shaft 5a holds the spool 5 around which a line is wound. A known oscillating mechanism is coupled to the spool shaft 5a, so that the spool shaft 5a is driven to reciprocate backwards and forwards along an axial direction thereof when the handle shaft 2a rotates in response to rotational operations of the handle 2.

In the configuration described above, by the handle 2 being operated to rotate, the rotor 3 is driven to rotate via the drive gear 7 and the pinion 8a (the rotating tubular shaft 8) which meshes with the drive gear 7, while the spool 5 is caused to reciprocate backwards and forwards via the oscillating mechanism. A line guide portion is provided on the rotor 3 as will be described in detail below, and a line is uniformly wound around a line winding body portion 5b of the spool 5 via the line guide portion provided on the rotor 3.

The rotor 3 includes a substantially cylindrical main body portion 3a, and a pair of arm portions 3b are formed on opposite sides of the main body portion 3a so as to be spaced substantially 180° apart from each other. As shown in Fig. 2, the respective arm portions 3b are formed integrally on the main body portion 3a together with connecting portions 3b' which project radially outwards from a rear portion (a reel main body side) of the main body portion 3a, and the arm portions 3b extend in the axial direction. By this configuration, gaps are defined between the main body portion 3 and the respective arm portions 3b. As shown in Fig. 1, a skirt portion 5c of the spool 5 is positioned in the gaps.

As generally known, support members 3c are supported at distal ends of the pair of arm portions 3b so as to be turned about pivots 3c' between a line winding position and a line reeling-out position. A line guide portion (a line roller) 3d is provided at a distal end portion of one of the support members 3c. In addition, a bail 3e is provided so as to extend between both the support members 3c. The bail 3e picks up a line when the support members 3c are turned from the line reeling-out position to the line winding position and guides the line to the line guide portion 3d. In the invention, a configuration (a bail-less configuration) in which no bail 3e is provided may be adopted.

A turning and holding mechanism (not shown) is installed in an interior of one of the pair of arm portions 3b. This turning and holding mechanism allows the support members 3c to be selectively turned between the ling winding position and the line reeling-out position and holds the support members 3c in the selected position. In addition, reinforcement members 10 are provided on the pair of arm portions 3b.

Hereinafter, the configuration of the reinforcement members 10 will be described in detail.

As shown in Fig. 3, the reinforcement members 10 extend from side portions of the pair of arm portions 3b towards the rear portion of the main body portion 3a of the rotor 3 and are connected to the main body portion 3a. In this case, the reinforcement members 10 are preferably provided on both the side portions of each of the pair of arm portions 3b as shown in Fig. 3b. The reinforcement members 10 provided on both the side portions of each of the arm portions 3b preferably have substantially the same shape. The reinforcement members 10 extend from a front portion (a portion where the support member 3c is provided) towards a proximal portion of the arm portion 3b on the side portions thereof and are gradually spaced away from each other as they so extend. Namely, the reinforcement members 10 are provided so as to form a substantially inverted V-like shape when viewed sideways in a direction in which both the arm portions 3b face each other, whereby gaps (space portions) G are produced between opposite sides of the proximal portion of the arm portion 3b and the reinforcement members 10. Note that the gaps G gradually expand when the reinforcement members 10 and the arm portion 3b are viewed sideways. Namely, the reinforcement members 10 are formed so as to extend axially rearwards (or on an axially rearward side) from the front portions of the pair of arm portions 3b to eventually connect the pair of arm portions 3b together while being disposed radially outwards of the main body portion 3a.

In addition, in this embodiment, as shown in Fig. 2, the reinforcement member 10 is formed so as to extend between the pair of arm portions 3b and is formed integrally with the main body portion 3a of the rotor 3 so that an intermediate portion 10A is connected to the rear portion of the main body portion 3a (refer to Figs. 2 and 4). Because of this, as shown in Fig. 2, the reinforcement member 10 is formed to extend continuously between the pair of arm portions 3b without any break and is made convex towards the reel main body side.

In this embodiment, as shown in Fig. 2, the reinforcement member 10 is curved towards the reel main body side (axially rearwards) between the pair of arm portions 3b. At least a lowest end portion (an area where the intermediate portion 10A exists) of the reinforcement member 10 is designed to be positioned closer to the reel main body side than a rear edge portion (a line denoted by P) of the skirt portion 5c of the spool when the spool 5 reciprocates to be shifted closest to the reel main body side. More specifically, the reinforcement member 10 is positioned so that both sides of a rear end of the skirt 5c partially overlap the reinforcement member 10 when the spool 5 is shifted closes to the reel main body side. Thus, even in the event that the spool 5 reciprocates, the reciprocation of the spool 5 can visually be recognized with ease without being interrupted by the reinforcement member 10.

According to the fishing spinning reel that is configured as has been described above, by the side portions of the arm portions 3b and the rear portion of the main body portion 3a of the rotor 3 being connected together by the reinforcement members 10, even in the event that a large load is exerted on the arm portions 3b by virtue of a tension on the line, the reinforcement members 10 can disperse stress produced by the load so exerted, thereby making it possible to prevent the deformation or the like of the arm portions. In addition, as shown in Figs. 3 to 5, since gap portions like the gaps G can be provided as required by making the reinforcement members 10 into the beam-like construction without increasing the thickness of the proximal portion of the arm portion, it is possible to realize as much a reduction in weight of the rotor as possible while holding the strength of the arm portions.

In particular, the reinforcement members 10 extend between the arm portions 3b so as to be made convex (curved) towards the reel main body 1 while being connected to the rear portion of the main body portion 3a of the rotor 3. In this configuration, when a load is exerted radially on the arm portions, stress produced thereby can be dispersed effectively so as to avoid a stress concentration, thereby making it possible to reinforce the arm portions more effectively. In addition, since the reinforcement portions 10 are provided at both the side portions of the arm portions 3b, the reinforcement of the arm portions 3b can be enhanced more effectively, and enhancement in rotational balance of the rotor 3 can be realized.

Further, both the reinforcement members 10 are spaced away from each other as the reinforcement members 10 extend towards the proximal portion of the arm portion 3b on the side portions thereof so as to form the substantially inverted V-like shape as the reinforcement members 10 and the arm portion 3b are viewed sideways, whereby the arm portion is formed into a so-called tapered shape. In this configuration, even in the event that the line gets entangled with the arm portion due to the line getting loose or deflected or being slack at the time of reeling-out, the line is easily disentangled to a front of the arm portion, thereby making it possible to eliminate the trouble with the line. Further, the curved reinforcement member 10 projects further downwards than a lower edge of the skirt of the spool 5, whereby the shape of the rotor portion is changed, thereby making it possible to enhance the external appearance of the fishing spinning reel.

According to the fishing spinning reel that is configured as has been described above, since the side portions of the arm portions and the rear portion of the main body portion of the rotor are connected by the reinforcement members, even in the event that a large load is exerted on the arm portions by virtue of the tension on the line, the load can be dispersed via the reinforcement members, thereby making it possible to prevent the deformation or the like of the arm portions. In addition, since the reinforcement members are connected to the main body portion of the rotor while being spaced away from the arm portions as they are shifted towards the proximal portions of the arm portions, the increase in thickness of the proximal portions of the arm portions is prevented, thereby making it possible to realize as much a reduction in weight of the rotor as possible.

Note that while in the embodiment, the reinforcement members 10 are configured so that the reinforcement members 10 extend from one of the arm portions 3b to connect to the rear portion of the main body portion of the rotor and then extend further to connect to the other arm portion 3b, a configuration may be adopted in which the reinforcement members 10 extend from one of the arm portions 3b to connect to the rear portion of the main body portion of the rotor but do not extend as far as the other arm portion for connection. Namely, the configuration may be adopted in which the reinforcement members extend only between one of the arm portions and the rear portion of the main body portion of the rotor. In this case, one of the arm portions is preferably made to constitute the arm portion on which the line guide portion 3d is provided.

In addition, the front portion of the arm portion 3b to which the reinforcement members 10 are connected denotes a substantially front half portion of the arm portion 3b. Note that the reinforcement members 10 preferably extend from the front distal end portion of the arm portion.

Next, other embodiments according to the invention will be described.

In other embodiments that will be described below, only different portions from the embodiment that has just been described above will be described, and like reference numerals will be given to portions like to those of the aforedescribed embodiment, and a detailed description thereof will be omitted.

### Second Embodiment

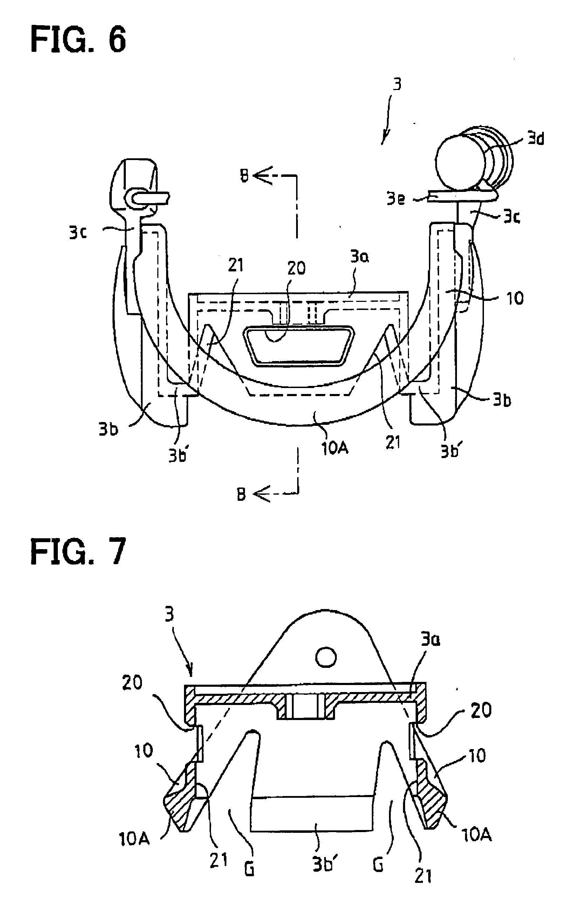

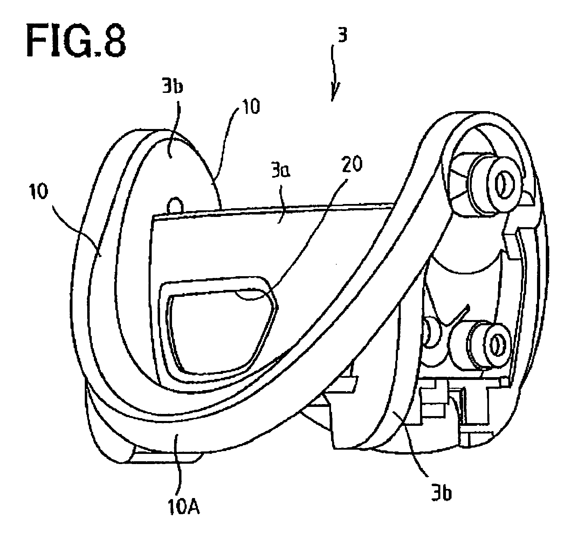

Figs. 6 to 8 show a fishing spinning reel according to a second embodiment. Fig. 6 shows a portion of the fishing spinning reel which constitutes a rotor thereof, Fig. 7 is a sectional view taken along the line B-B in Fig. 6, and Fig. 8 is a perspective view of a main part of the rotor shown in Fig. 6 (the perspective view showing a state in which a cover for arm portions is removed).

In this embodiment, openings 20 and cutouts 21 are formed in a main body portion 3a of a rotor 3. The openings 20 are formed in confronting positions which lie 90° apart from positions where arm portions 3b are formed, and the cutouts 21, which have a substantially triangular shape, are formed on both sides of each of the openings 20. In this way, the openings 20 and the cutouts 21 are formed in the different positions from those where the arm portions are formed as shown in Fig. 7, so as not to reduce the strength of the arm portions 3b. Intermediate portions 10A of reinforcement members 10 are connected integrally to respective lower end positions of the openings 20.

In this way, by providing the reinforcement members 10 which are curved convexly towards a reel main body (axially rearwards) between the arm portions 3b in the way described above, the frame construction is enabled in which the cutout or gap portions exist in the predetermined positions of the main body portion 3a to reduce the weight of the rotor as much as possible while realizing the reinforcement of the arm portions 3b. The shapes and forming positions of the openings 20 and the cutouts 21 can be modified as required, and only either the openings 20 or the cutouts 21 may be formed. In addition, in consideration of the external appearance of the fishing spinning reel, the shapes and positions of the openings and cutouts may be changed.

In addition, a waterproof cap K shown in Fig. 1 is attached to a front portion of a reel main body 1 which is disposed within the main body portion 3a of the rotor 3, so that a bearing portion which is provided between the front portion of the reel main body 1 and a tubular rotating shaft 8, and an anti-reverse mechanism can be accommodated in a waterproof fashion.

### Third Embodiment

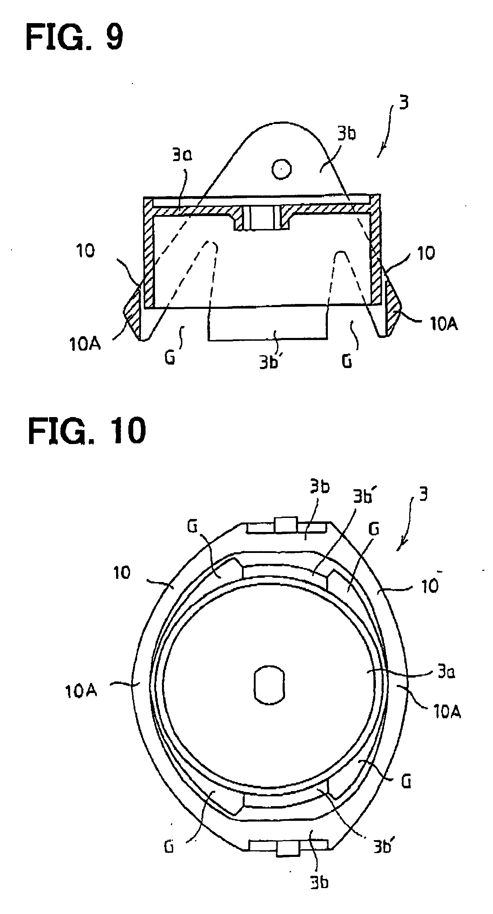

Figs. 9 and 10 show a fishing spinning reel according to a third embodiment. Fig. 9 is a sectional view of a rotor, and Fig. 10 is a plan view of the rotor shown in Fig. 9.

While the intermediate portions 10A of the reinforcement members 10 are connected to the rear portion of the main body portion 3a of the rotor 3 in the embodiments described above, in this embodiment, curved reinforcement members 10 are spaced apart from the rear portion of the main body portion 3a of the rotor 3 without being connected thereto so as to bridge a space defined between arm portions 3b.

Also, in this configuration, when a load is exerted on the arm portions 3b in a radial direction, the load so exerted can be dispersed effectively via the reinforcement members 10, whereby the arm portions 3b can be reinforcement effectively. In addition, in this configuration, openings and cutouts like those provided in the aforesaid embodiment may also be formed in the main body portion 3a of the rotor 3.

According to the fishing spinning reel that is configured as has been described above, since the reinforcement members are provided to extend between side portions of one of the arm portions and side portions of the other arm portion, even in the event that a large load is exerted on the arm portions by a tension on a line, a dispersion of stress produced on the arm portions is realized, whereby the arm portions are reinforced effectively, the deformation or the like of the arm portions being thereby prevented. Additionally, the reinforcement members are provided to extend between the arm portions so that the reinforcement members are spaced apart from the arm portions as they extend towards proximal portion sides of the arm portions to thereby become convex towards the reel main body side. Because of this, an increase in thickness of proximal portions of the arm portions is prevented, thereby making it possible to realize as much a reduction in weight of the rotor as possible.

### Fourth Embodiment

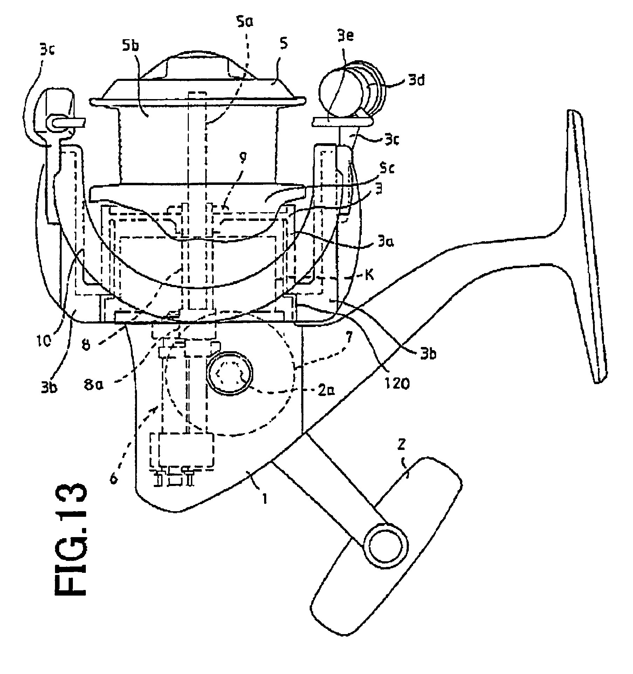

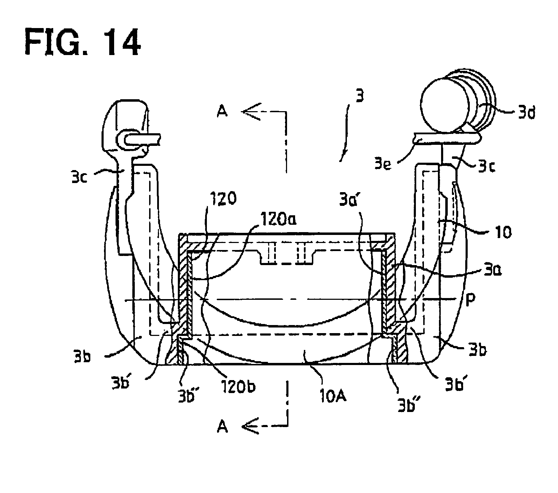

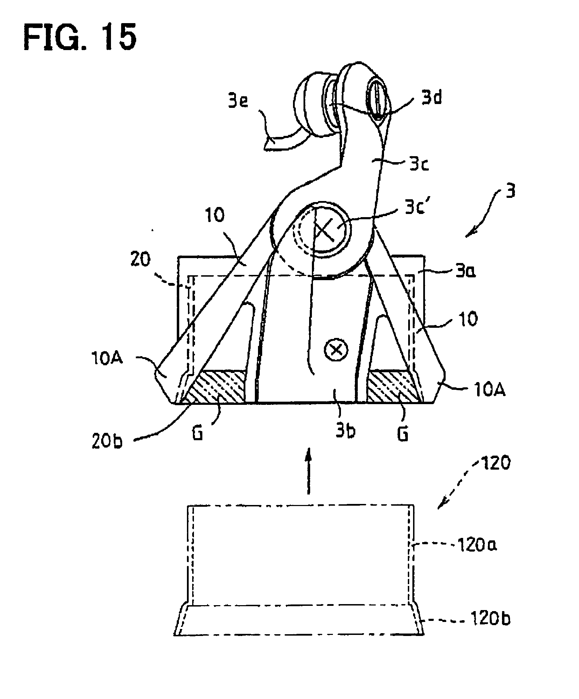

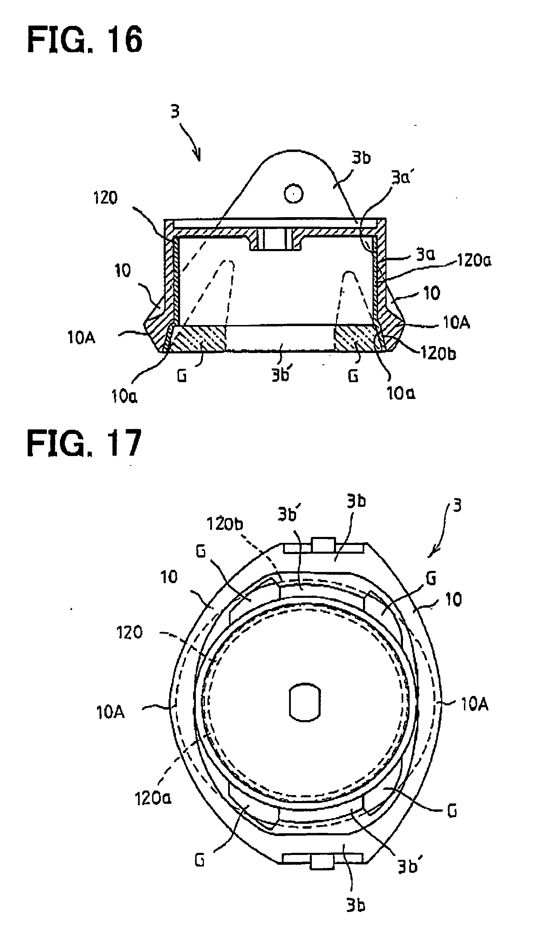

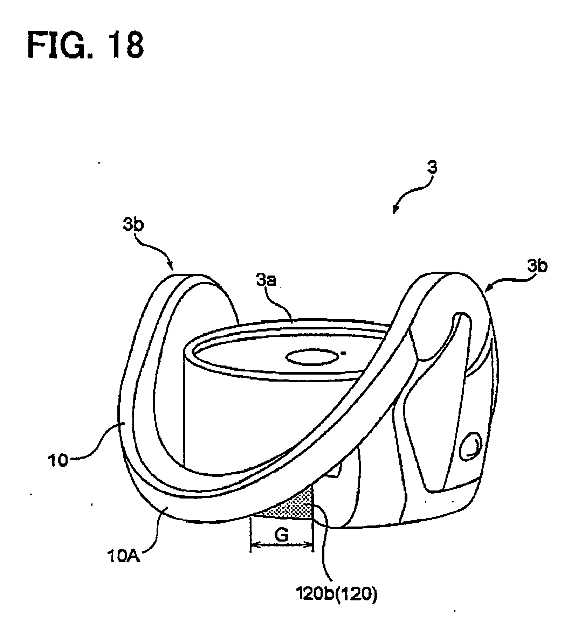

Next, a fishing spinning reel according to a fourth embodiment will be described. Figs. 13 to 18 show a fourth embodiment of the invention. Fig. 13 shows an overall configuration of a fishing spinning reel, Fig. 14 shows a portion of the fishing spinning reel where a rotor is provided, Fig. 15 is a side view of the rotor shown in Fig. 14 as viewed sideways in a direction in which both arm portions face each other, Fig. 16 is a sectional view taken along the line A-A in Fig. 14, Fig. 17 is a plan view of the rotor shown in Fig. 14, and Fig. 18 is a perspective view of a main part of the rotor shown in Fig. 14.

As has been described in the first embodiment, when a fishing spinning reel is viewed sideways in a direction in which arm portions 3b face each other, gaps (space portions) G exist on both sides of a proximal portion of each of the arm portions 3b between the sides of the proximal portion and reinforcement members 10.

When the fishing spinning reel is viewed sideways in the way described above, the space portions G shown in Fig. 15 gradually expand relative to the proximal portion of the arm portion 3b as the gaps extend towards the proximal portion. There is the possibility that the line gets slackened rearwards from a line guide portion due to a change in tension on the line or slackness in the line caused during a line winding operation so as to be entangled in the space portions. In this embodiment, the gaps in the space portions are closed by a closure member, which will be described later, so that the entanglement of the line with the reinforcement members 10 is prevented.

A closure member 120 is provided on a rotor 3 which closes the space portions G defined between both the sides of the proximal portion of each of the arm portions 3b and the reinforcement members 10. Here, the closure member means a member (which may be a portion integrated with the rotor) functioning to prevent the line from entering the portions (the space portions G) indicated by chain double-dashed lines which are produced by the aforesaid reinforcement members 10 being formed to thereby be entangled with the reinforcement members 10. In this embodiment, the closure member 120 includes a collar-like member (a cylindrical member) which is separate from the rotor 3 and which is installed in an interior of the main body portion 3a of the rotor 3.

Specifically speaking, the closure member 120 of this embodiment is formed based on the shape of the main body portion 3a of the rotor 3 and the shape of connecting portions 3b' which project radially outwards from the main body portion. The closure member 120 includes a primary cylindrical portion 120a which is closely attached to an inner circumferential surface of the cylindrical main body portion 3a and a secondary cylindrical portion 120b which can closely be attached to radially inward inner surfaces 3b" which are formed on the connecting portions 3b' and which is larger in diameter than the primary cylindrical portion 120a.

The closure member 120 can be fitted in or press fitted in the main body portion 3a of the rotor in a direction indicated by an arrow in Fig. 15. The closure member 120 can be attached integrally to the rotor 3 by the primary cylindrical portion 120a being bonded to the inner circumferential surface 3a' of the main body portion 3a and part of a circumferential surface of the secondary portion 120b being bonded to the inner surfaces 3b" of the connecting portions 3b'. By doing this, the secondary cylindrical portion 120b of the closure member 120 closes (covers) areas indicated by chain double-dashed lines in Figs. 15 and 16, whereby the line is prevented from entering these areas to be entangled with the reinforcement members 10.

Note that the secondary cylindrical portion 120b may be brought into abutment with inner surfaces 10a of the reinforcement members 10 instead of being bonded thereto, or part of the circumferential surface of the secondary cylindrical portion 120b may be bonded to the inner surfaces 10a of the reinforcement members. Alternatively, the closure member 120 may elastically be locked on the inner circumferential surface 3a' or on the inner surfaces 3b".

Then, since the closure member 120 is provided on the rotor 3 which covers the space portions G defined between both the sides of the proximal portions of the arm portions 3b and the reinforcement members 10, even in the event that the line is slackened towards the rear portion of the rotor as a result of slackness generated in the line or deflection of the line, the line is prevented from being entangled with the reinforcement members 10 which is provided to bridge the space between the arm portions, whereby the line is prevented from being broken or damaged. In addition, since the line is prevented from being caught on the reinforcement members 10 even during the line winding operation, there is caused no problem with the line winding operation.

Note that since the closure member 120 functions to prevent the line from being caught on the reinforcement members 10 but does not function to reinforce the arm portions 3b, the closure member 120 is preferably formed of a material whose specific gravity is smaller than that of a material for the rotor 3. For example, in the event that the rotor is formed of a material such as aluminum, the closure member 120 is formed of a material such as resin, whereby the rotor can be prevented from getting heavy. In addition, the closure member 120 may be fixed to the rotor 3 through bonding or may be fixed thereto by means of mechanical members such as screws.

A waterproof cap K shown in Fig. 13 is attached to a front portion of a reel main body 1 that is disposed within the main body portion 3a of the rotor 3 so that a bearing portion that is provided between the front portion of the reel main body 1 and a tubular rotating shaft 8 and an anti-reverse mechanism can be accommodated in a waterproof fashion.

According to the fishing spinning reel configured as has been described above, since the side portions of the arm portions and the rear portion of the main body portion of the rotor are connected together by the reinforcement members, even in the event that a large load is exerted on the arm portions by virtue of a tension on the line, the load so exerted can be dispersed via the reinforcement members, thereby making it possible to prevent the deformation or the like of the arm portions. In addition, since the reinforcement members are spaced apart from the arm portions as they extend towards the proximal portions of the arm portions so as to be connected to the main body portion of the rotor, an increase in thickness of the proximal portions of the arm portions is prevented, thereby making it possible to realize as much a reduction in weight of the rotor as possible. Further, since the closure member (the cover portion) is provided on the rotor which covers the space portions defined between the proximal portions of the arm portions and the reinforcement members, even in the event that the line is slackened from the ling guide portion as a result of a change in tension on the line or slackness in the line being caused during the line winding operation, there is caused no such situation in which the line gets entangled in the areas where the space portions are defined.

According to the invention, it is possible to realize as much a reduction in weight of the rotor as possible while maintaining the strength of the arm portions, thereby making it possible to obtain the fishing spinning reel which experiences less line entanglement.

### Fifth Embodiment

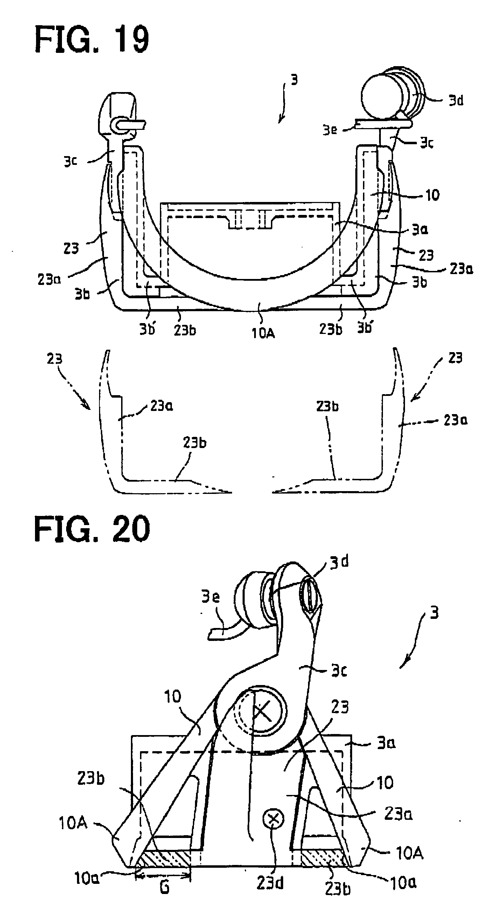

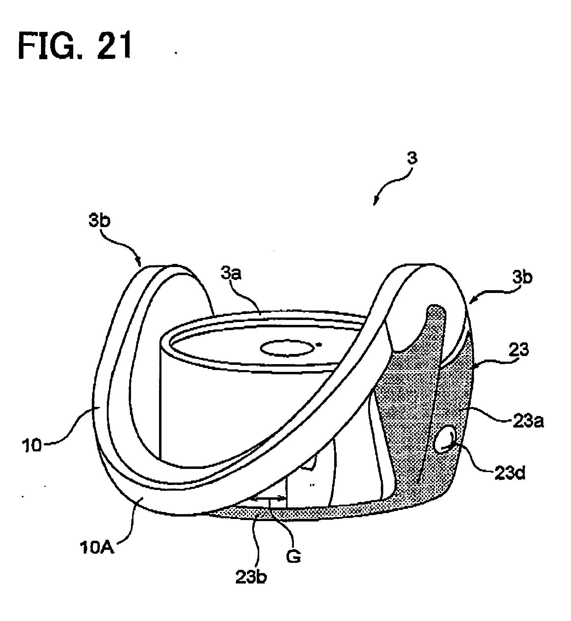

Figs. 19 to 21 show a fishing spinning reel according to a fifth embodiment. Fig. 19 shows a portion of the fishing spinning reel where a rotor thereof exists, Fig. 20 is a side view of the rotor shown in Fig. 19 as viewed sideways in a direction in which both arm portions face each other, and Fig. 21 is a perspective view of a main part of the rotor shown in Fig. 19.

In the embodiment described above, the closure member is formed as the separate member (the collar-like member) from the constituent members of the rotor and is designed to be press fitted in the main body portion 3a. However, the closure member may be formed as a part of a member which forms the rotor 3. In this embodiment, the closure member is integrated with a cover member 23 which is attached to a surface of each arm portion 3b.

Normally, the bail flipping mechanism is accommodated in the arm portion 3b, and a surface thereof is covered by the cover member 23. The cover members 23 according to the fifth embodiment are designed to cover the arm portions 3b individually, and each cover member 23 includes a cover portion 23a which covers the arm portion 3b and a pair of arm portions (closing portions) 23b which extend in an are-like fashion towards circumferential sides at a lower end of the cover portion 23a (in Fig. 21, only one of the pair of arm portions is shown). Then, the pair of arm portions close (cover) space portions G which are areas indicated by chain double-dashed lines in Fig. 20 so as to prevent the line from entering the areas for entanglement with reinforcement members 10.

Distal end portions of the arm portions 23b are designed to be brought into abutment with inner surfaces 10a of intermediate portions 10A of reinforcement members 10 when the cover members 23 are attached to the arm portions 3b with screws 23d or the like. In the case of a configuration being adopted in which the bail flipping mechanism is collected into an interior of one of the arm portions 3b, since the other cover member does not have to be removed, the arm portion 23b for the other cover member may be fixed to the reinforcement member 10 through bonding or the like.

According to this configuration, since the closure members (the arm portions 23b having the closing functions) are integrated with the constituent members of the rotor 3, a further weight reduction of the rotor 3 can be enabled.

Thus, while the embodiments of the invention have been described, the invention is not limited to the embodiments so described and hence can be modified variously.

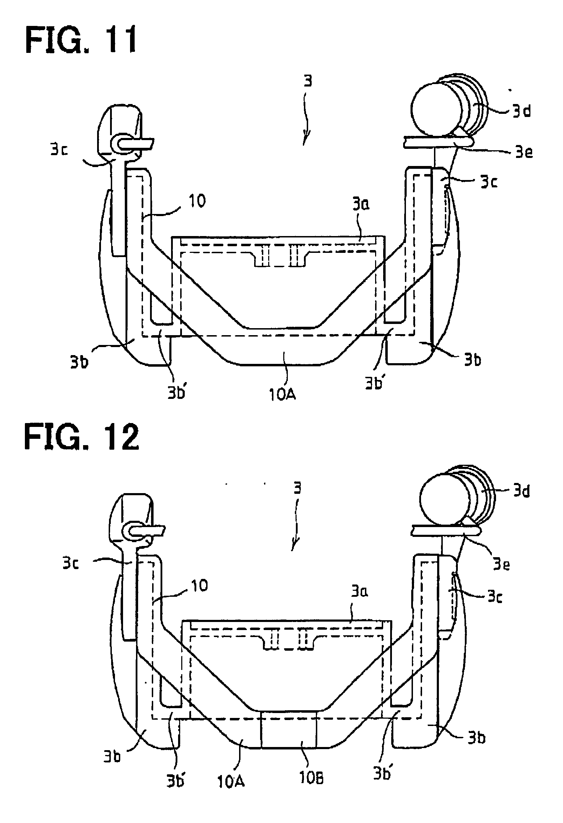

As to the reinforcement members 10, the shape thereof can be changed as required. For example, when the reinforcement member 10 is formed so as to be convex towards the reel main body side, the reinforcement member 10 does not necessarily have to be curved but can be formed into a substantially V-like shape which is made up of straight lines as is shown in Fig. 11. In addition, as to the surface of the reinforcement members 10, the surface does not necessarily have to be made into the flat surface but may be configured as shown in Fig. 12, for example. Namely, a configuration may be adopted in which the intermediate portion of the reinforcement member 10 is made into a thick portion 10B and this thick portion is connected to the rear portion 3a of the rotor 3. By adopting the configuration, an increase in strength at the connecting portion can be realized. Further, the thickness of the reinforcement members 10 can also be changed as required. The connecting positions of the reinforcement members 10 to the main body portion of the rotor 3 can also be changed as required as long as the reciprocating motions of the spool 5 are not interrupted.

In addition, while the reinforcement members are described as being formed continuously so as to bridge the space between the arm portions, a configuration may be adopted, for example, in which the continuity of the reinforcement member is broken at the intermediate portion and the reinforcement member is connected to the main body portion 3a at resulting end portions thereof.

Additionally, as to the closure member, the closure member may only have to be made to close the space portions G effectively. For example, the closure member may be formed as a portion which is integrated with the rotor so as to connect the proximal portions of the arm portions 3b with the intermediate portions 10A of the reinforcement members 10.

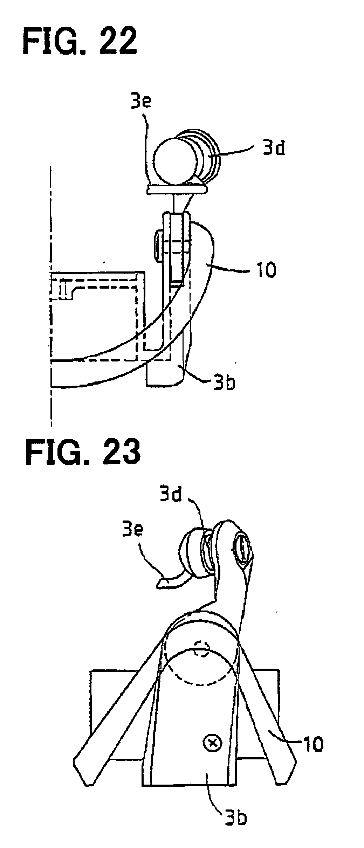

In addition, while, in the embodiment, the reinforcement members 10 are described as extending from the front portions of the side portions of the arm portions 3b, the positions where the reinforcement members 10 extend from the arm portions 3b are not limited to the side portions of the arm portions. The reinforcement members 10 may extend from any positions on the front portions of the arm portions. For example, as shown in Figs. 22, 23, a configuration may be adopted in which the reinforcement members 10 extend from radially outer circumferential portions of the arm portions 3b. In this case, one and the other of the reinforcement members are preferably connected together at the radially outer circumferential portions of the arm portions.

## Claims

1. A fishing spinning reel comprising:
a reel main body (1);
a spool (5) which is provided on the reel main body and around which a line is to be wound; and
a rotor (3) which is provided so as to rotate relative to the reel main body,
wherein the rotor (3) includes:
a main body portion (3a);
a pair of arm portions (3b) which are formed on opposite sides of the main body portion so as to be opposed to each other and which each include a proximal portion situated axially rearwards and a front portion situated axially forwards;
a pair of support members (3c) which are provided at the front portions of the pair of arm portions;
a line guide portion (3d) which is provided on one of the support members for guiding a line on to the spool; **characterized in**
a pair of reinforcement members (10) which extend axially rearwards from the front portions of the pair of arm portions (3b) and connect the pair of arm portions so as to be disposed radially outwards of the main body portion (3a), wherein
the pair of reinforcement members (10) are provided on both sides of the pair of arm portions (3b), and are gradually spaced apart from each other as the pair of arm portions extend from distal end portions to the proximal portions when the arm portion is viewed sideways in a direction in which the pair of arm portions face each other, and wherein
gaps (G) are provided between opposite sides of the proximal portion of the arm portion (3b) and the reinforcement members (10).

2. The fishing spinning reel according to claim 1, wherein the reinforcement members (10) include an intermediate portion which is situated axially rearwards and which is connected to the main body portion (3a).

3. The fishing spinning reel according to claim 2, wherein the reinforcement members (10) are formed so as to be curved axially rearwards, and the intermediate portion is connected to a rear portion of the main body portion (3a).

4. The fishing spinning reel according to claim 1, wherein the reinforcement members (10) include an intermediate portion which is situated axially rearwards from the main body portion (3a) and which is spaced apart from the main body portion (3a).

5. The fishing spinning reel according to any of claims 1 to 4, wherein at least one of an opening and a cutout is formed in the main body portion (3a).

6. The fishing spinning reel according to any of claims 2 to 5, wherein the intermediate portion is positioned closer to the reel main body (1) than a rear edge portion of a skirt portion of the spool when the spool reciprocates to be shifted closest to the reel main body.

7. The fishing spinning reel according to any of claims 1 to 6 further comprising a closure member which is provided on the rotor so as to cover a space defined between the proximal portion of the arm portion and the reinforcement members.

8. The fishing spinning reel according to claim 7, wherein the closure member is a collar-shaped member which is installed in an interior of the main body portion of the rotor.

9. The fishing spinning reel according to claim 7, wherein the closure member is integrated with a cover member which is attached to the arm portions of the rotor.

10. The fishing spinning reel according to any one of claims 1 to 9, wherein the reinforcement members (10) extend from side portions of the front portions of the arm portions of the rotor.

11. The fishing spinning reel according to any one of claims 1 to 10, wherein a bail (3e) is provided so as to extend between both the support members (3c).

12. The fishing spinning reel according to any one of claims 1 to 11, wherein the reinforcement members (10) is asymmetrically shaped with respect to a plane extending through the support members (3c).

## Patentansprüche

1. Angelspinnrolle umfassend:
einen Rollenhauptkörper (1);
eine Spule (5), die auf dem Rollenhauptkörper vorgesehen ist und um die eine Schnur gewickelt werden soll; und
einen Rotor (3), der so vorgesehen ist, dass er sich relativ zu dem Rollenhauptkörper dreht,
wobei der Rotor (3) umfasst:
einen Hauptkörperabschnitt (3a);
ein Paar von Armabschnitten (3b), die auf gegenüberliegenden Seiten des Hauptkörperabschnitts ausgebildet sind, so dass einander gegenüberliegen und jeweils einen nahen axial nach hinten angeordneten Abschnitt und einen vorderen axial nach vom angeordneten Abschnitt umfassen;
ein Paar von Stützgliedern (3c), die an den vorderen Abschnitten des Paares von Armabschnitten vorgesehen sind;
einen Schnurführungsabschnitt (3d), der auf einem der Stützglieder zum Führen einer Schnur auf der Spule vorgesehen ist, **gekennzeichnet durch**
ein Paar von Verstärkungselementen (10), die sich von den vorderen Abschnitten des Paares von Armabschnitten (3b) axial nach hinten erstrecken und das Paar Armabschnitte verbinden, so dass sie von dem Hauptkörperabschnitt (3a) radial nach außen angeordnet sind, wobei
das Paar von Verstärkungselementen (10) auf beiden Seiten des Paares von Armabschnitten (3b) vorgesehen sind und schrittweise in dem Maße voneinander entfernt sind, wie das Paar von Armabschnitten sich von fernen Endabschnitten zu den nahen Abschnitte erstreckt, wenn der Armabschnitt seitlich in einer Richtung, in der das Paar von Armabschnitten einander gegenüberliegt, betrachtet wird, und wobei Aussparungen (G) zwischen gegenüberliegenden Seiten des nahen Abschnitts des Armabschnitts (3b) und den Verstärkungselementen (10) vorgesehen sind.

2. Angelspinnrolle nach Anspruch 1, wobei
die Verstärkungselemente (10) einen mittleren Abschnitt umfassen, der axial nach hinten angeordnet ist und mit dem Hauptkörperabschnitt (3a) verbunden ist.

3. Angelspinnrolle nach Anspruch 2, wobei
die Verstärkungselemente (10) so ausgebildet sind, dass sie axial nach hinten gekrümmt sind, und der mittlere Abschnitt mit einem hinteren Abschnitt des Hauptkörperabschnitts (3a) verbunden ist.

4. Angelspinnrolle nach Anspruch 1, wobei
die Verstärkungselemente (10) einen mittleren Abschnitt umfassen, der von dem Hauptkörperabschnitt (3a) axial nach hinten angeordnet und von dem Hauptkörperabschnitt (3a) beabstandet ist.

5. Angelspinnrolle nach einem der Ansprüche 1 bis 4,
wobei mindestens eine Öffnung und/oder ein Ausschnitt in dem Hauptkörperabschnitt (3a) ausgebildet ist.

6. Angelspinnrolle nach einem der Ansprüche 2 bis 5,
wobei der mittlere Abschnitt näher an dem Rollenhauptkörper (1) als an einem hinteren Randabschnitt eines Grenzabschnitts der Spule positioniert ist, wenn die Spule sich hin- und herbewegt, um am nächsten zu dem Rollenhauptkörper verschoben zu werden.

7. Angelspinnrolle nach einem der Ansprüche 1 bis 6
ferner umfassend ein Schließelement, das an dem Rotor vorgesehen ist, um einen Raum abzudecken, der zwischen dem nahen Abschnitt des Armanschnitts und den Verstärkungselementen angeordnet ist.

8. Angelspinnrolle nach Anspruch 7, wobei die
das Schließelement ein Kragenglied ist, das in einem Innenraum des Hauptkörperabschnitts des Rotors angebracht ist.

9. Angelspinnrolle nach Anspruch 7, wobei
das Schließelement mit einem Abdeckungselement ausgebildet ist, das an den Armabschnitten des Rotors angebracht ist.

10. Angelspinnrolle nach einem der Ansprüche 1 bis 9, wobei
die Verstärkungselemente (10) sich von seitlichen Abschnitten der vorderen Abschnitte der Armabschnitte des Rotors erstrecken.

11. Angelspinnrolle nach einem der Ansprüche 1 bis 10, wobei
ein Bügel (3e) so vorgesehen ist, dass er sich zwischen den beiden Stützgliedern (3e) erstreckt.

12. Angelspinnrolle nach einem der Ansprüche 1 bis 11, wobei
die Verstärkungselemente (10) asymmetrisch in Bezug auf eine Ebene, die sich durch die Stützglieder (3c) erstreckt, geformt ist.

## Revendications

1. Moulinet de pêche à lancer léger comprenant :
un corps principal de moulinet (1) ;
un tambour (5) qui est prévu sur le corps principal de moulinet et autour duquel une ligne doit être enroulée ; et
un rotor (3) qui est prévu pour tourner par rapport au corps principal de moulinet,
dans lequel le rotor (3) comprend :
une partie de corps principal (3a) ;
une paire de parties de bras (3b) qui sont formées sur les côtés opposés de la partie de corps principal afin d'être opposées l'une par rapport à l'autre et qui comprennent chacune une partie proximale située de manière axial vers l'arrière et une partie avant située de manière axiale vers l'avant ;
une paire d'éléments de support (3c) qui sont prévus au niveau des parties avant de la paire de parties de bras ;
une partie de guidage de ligne (3d) qui est prévue sur l'un des éléments de support pour guider une ligne sur la tambour ; **caractérisé en ce que**
une paire d'éléments de renforcement (10) qui s'étendent axialement vers l'arrière à partir des parties avant de la paire de parties de bras (3b) et raccordent la paire de parties de bras afin qu'elles soient disposées radialement vers l'extérieur de la partie de corps principal (3a), dans lequel
la paire d'éléments de renforcement (10) sont prévus des deux côtés de la paire de parties de bras (3b) et sont progressivement espacés l'un de l'autre lorsque la paire de parties de bras s'étend à partir des parties d'extrémité distale jusqu'aux parties proximales lorsque la partie de bras est observée latéralement dans une direction dans laquelle la paire de parties de bras se font face, et dans lequel
des espaces (G) sont prévus entre les côtés opposés de la partie proximale de la partie de bras (3b) et les éléments de renforcement (10).

2. Moulinet de pêche à lancer léger selon la revendication 1, dans lequel les éléments de renforcement (10) comprennent une partie intermédiaire qui est située axialement vers l'arrière et qui est raccordée à la partie de corps principal (3a).

3. Moulinet de pêche à lancer léger selon la revendication 2, dans lequel les éléments de renforcement (10) sont formés afin d'être incurvés axialement vers l'arrière, et la partie intermédiaire est raccordée à une partie arrière de la partie de corps principal (3a).

4. Moulinet de pêche à lancer léger selon la revendication 1, dans lequel les éléments de renforcement (10) comprennent une partie intermédiaire qui est située axialement vers l'arrière à partir de la partie de corps principal (3a) et qui est espacée de la partie de corps principal (3a).

5. Moulinet de pêche à lancer léger selon l'une quelconque des revendications 1 à 4, dans lequel au moins l'une parmi une ouverture et une découpe est formée dans la partie de corps principal (3a).

6. Moulinet de pêche à lancer léger selon l'une quelconque des revendications 2 à 5, dans lequel la partie intermédiaire est positionnée plus près du corps principal de moulinet (1) qu'une partie de bord arrière d'une partie de jupe du tambour lorsque le tambour effectue un mouvement de va-et-vient pour être amené le plus près du corps principal de moulinet.

7. Moulinet de pêche à lancer léger selon l'une quelconque des revendications 1 à 6, comprenant en outre un élément de fermeture qui est prévu sur le rotor afin de recouvrir un espace défini entre la partie proximale de la partie de bras et les éléments de renforcement.

8. Moulinet de pêche à lancer léger selon la revendication 7, dans lequel l'élément de fermeture est un élément en forme de collier qui est installé dans un intérieur de la partie de corps principal du rotor.

9. Moulinet de pêche à lancer léger selon la revendication 7, dans lequel l'élément de fermeture est intégré avec un élément de couvercle qui est fixé aux parties de bras du rotor.

10. Moulinet de pêche à lancer léger selon l'une quelconque des revendications 1 à 9, dans lequel les éléments de renforcement (10) s'étendent à partir des parties latérales des parties avant des parties de bras du rotor.

11. Moulinet de pêche à lancer léger selon l'une quelconque des revendications 1 à 10, dans lequel on prévoit une anse de panier (3e) afin de s'étendre entre les deux éléments de support (3c).

12. Moulinet de pêche à lancer léger selon l'une quelconque des revendications 1 à 11, dans lequel les éléments de renforcement (10) sont formés de manière asymétrique par rapport à un plan s'étendant à travers les éléments de support (3c).
